# EUROPEAN PATENT APPLICATION

(11) **EP 4 529 134 A1**
(43) Date of publication of application: **26.03.2025**
(21) Application number: 23807384.5
(22) Date of filing: 21.04.2023
(51) Int. Cl.: H04L 67/55

(54) **IN-VEHICLE COMMUNICATION DEVICE AND PUSH SERVER**

(30) Priority: 19.05.2022 JP 2022082281
(71) Applicant: DENSO CORPORATION, Aichi-pref., 448-8661 (JP)
(72) Inventor: IKUSHIMA, Keisuke, Kariya-city, Aichi-pref., 4488661 (JP)
(74) Representative: Winter, Brandl - Partnerschaft mbB
(86) International application number: PCT/JP2023/015968
(87) International publication number: WO 2023/223772

(57) **Abstract**

An in-vehicle communication device (4) transmits, to an in-vehicle electronic control unit, push data in response to receiving the push data from a push server (3). The push server transmits the push data in response to reception of a transmission request of the push data from an application server (2). The in-vehicle communication device includes a notification monitoring unit (4a) monitoring notification of startup request transmitted from the push server using a first communication method, and a reception control unit (4b) receiving the push data transmitted from the push server using a second communication method. The first communication method requires a lower standby power consumption than the second communication method, and the second communication method allows a longer data length of push data than the first communication method.

## Description

### CROSS REFERENCE TO RELATED APPLICATION

This application is based on Japanese Patent Application No. 2022-082281 filed on May 19, 2022, the disclosure of which is incorporated herein by reference.

### TECHNICAL FIELD

The present disclosure relates to an in-vehicle communication device and a push server.

### BACKGROUND ART

A push system that transmits push data is provided as one of remote request services for accessing, from outside of the vehicle, an application of an in-vehicle system. In the push system, an application server and a push server are provided on the cloud, and an in-vehicle communication device and an in-vehicle electronic control unit (hereinafter referred to as an in-vehicle ECU) are provided to the vehicle. When a cloud application is started by a smartphone terminal or the like and the push server receives, from the application server, a request to transmit push data, the push server transmits the push data to the in-vehicle communication device. The in-vehicle communication device transmits the push data transmitted from the push server to the in-vehicle ECU, and transfers the push data to an application installed in the in-vehicle system, which is mounted on the in-vehicle ECU (for example, refer to Patent Literature 1).

### PRIOR ART LITERATURES

### PATENT LITERATURE

Patent Literature 1: JP 2019-192953 A

### SUMMARY

In the above-described push system, it is desirable to reduce an electric power consumption of the in-vehicle communication device in a standby state for monitoring reception of push data transmitted from the push server. When the vehicle is parked for a long period of time and thus a remaining capacity of vehicle battery needs to be ensured, it is desirable to reduce the power consumption of battery in the standby state as much as possible. However, in a known method for reducing the consumption power of standby state, a data length of push data received from the push server is short.

An object of the present disclosure is to properly receive push data transmitted from a push server. Another object of the present disclosure is to properly transmit the push data to an in-vehicle communication device.

According to an aspect of the present disclosure, an in-vehicle communication device transmits, to an in-vehicle electronic control unit, push data in response to receiving the push data from a push server. The push server transmits, to the in-vehicle communication device, the push data in response to reception of a transmission request of the push data from an application server. The in-vehicle communication device includes: a notification monitoring unit monitoring notification of startup request transmitted from the push server using a first communication method; and a reception control unit receiving the push data transmitted from the push server using a second communication method. The first communication method requires a lower standby power consumption than the second communication method, and the second communication method allows a longer data length of push data than the first communication method.

In the above configuration, notification monitoring of startup request transmitted from the push server is performed using the first communication method, and reception of the push data from the push server is performed using the second communication method. By performing the notification monitoring of startup request using the first communication method, which consumes lower standby power than the second communication method, it is possible to appropriately reduce the standby power consumption. By receiving the push data transmitted from the push server using the second communication method, which allows longer length of push data than the first communication method, the length of push data received from the push server is longer than that of the first communication method. Thus, the push data transmitted from the push server can be properly received. With this configuration, it is possible to appropriately reduce the standby power consumption and to appropriately receive the push data transmitted from the push server.

According to an aspect of the present disclosure, a push server transmits push data to an in-vehicle communication device upon receiving a transmission request of the push data from an application server. The push server includes: a notification control unit notifying the in-vehicle communication device of a startup request using a first communication method; and a transmission control unit transmitting the push data to the in-vehicle communication device using a second communication method. The first communication method requires a lower standby power consumption of the in-vehicle communication device than the second communication method, and the second communication method allows a longer data length of push data to be transmitted to the in-vehicle communication device than the first communication method.

In the above configuration, the notification of startup request transmitted from the push server to the in-vehicle communication device is performed by the first communication method, and the transmission of push data from the push server to the in-vehicle communication device is performed by the second communication method. By transmitting the push data to the in-vehicle communication device using the second communication method, the data length of push data transmitted to the in-vehicle communication device is longer than that of the first communication method. Thus, the push data can be properly transmitted to the in-vehicle communication device.

### BRIEF DESCRIPTION OF DRAWINGS

The above and other objects, features and advantages of the present disclosure will become more apparent from the following detailed description made with reference to the accompanying drawings. In the drawings:
FIG. 1 is a diagram showing an overall configuration of a push system according to a first embodiment;
FIG. 2 is a functional block diagram of an in-vehicle communication device and a push server;
FIG. 3 is a sequence diagram;
FIG. 4 is a sequence diagram;
FIG. 5 is a sequence diagram;
FIG. 6 is a sequence diagram;
FIG. 7 is a functional block diagram of an in-vehicle communication device and a push server according to a second embodiment;
FIG. 8 is a sequence diagram;
FIG. 9 is a sequence diagram;
FIG. 10 is a sequence diagram;
FIG. 11 is a sequence diagram according to a third embodiment;
FIG. 12 is a sequence diagram;
FIG. 13 is a sequence diagram;
FIG. 14 is a sequence diagram according to a fourth embodiment;
FIG. 15 is a sequence diagram;
FIG. 16 is a sequence diagram; and
FIG. 17 is a sequence diagram.

### DESCRIPTION OF EMBODIMENTS

The following will describe embodiments of the present disclosure with reference to the accompanying drawings. Descriptions of parts common to multiple embodiments will be omitted.

### (First Embodiment)

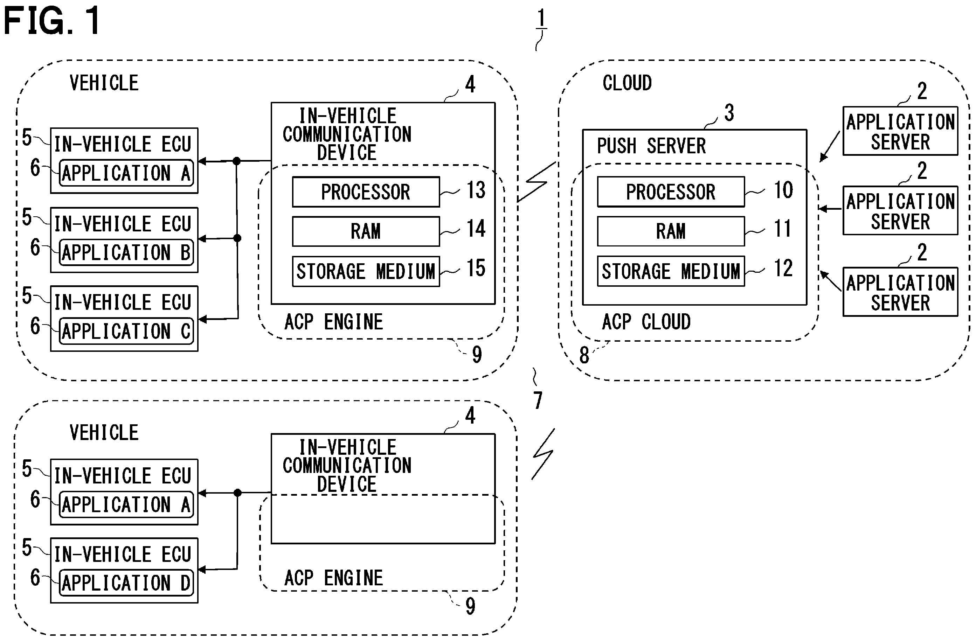

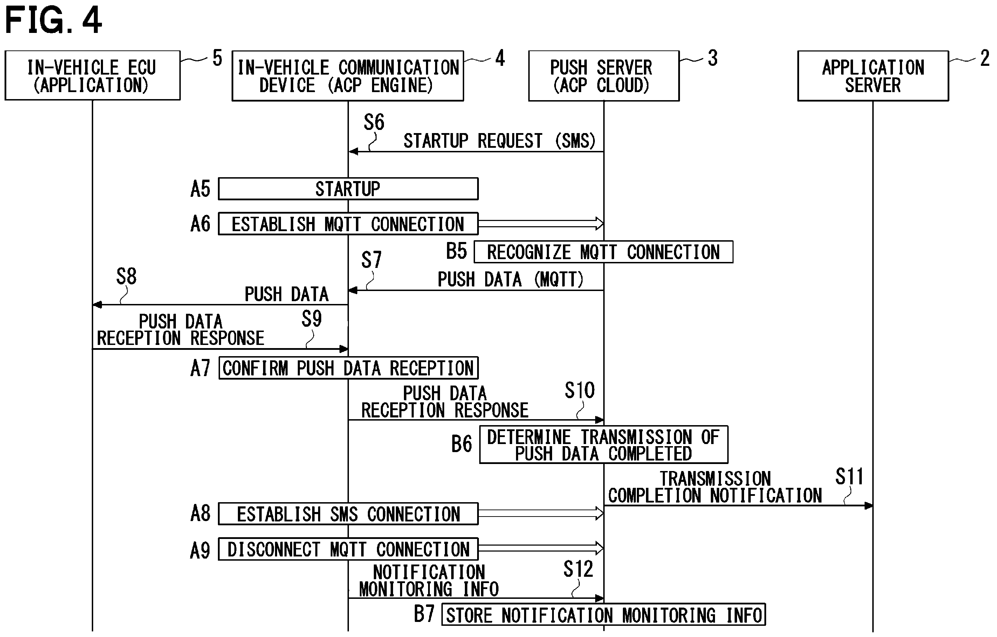

The following will describe a first embodiment with reference to FIG. 1 to FIG. 6. As shown in FIG. 1, a push system 1 includes an application server 2 and a push server 3, which are provided on cloud, and an in-vehicle communication device 4 and an in-vehicle ECU 5, which are provided to a vehicle. The in-vehicle ECU 5 is equipped with an application 6 for implementing a remote request service. The push system 1 is a system that enables transmission of push data from the application server 2 to the application 6.

For example, when a user starts and performs a predetermined operation of an application on a smartphone terminal to remotely start a vehicle air conditioning device before boarding or lock doors, transmission request of push data instructing start of air conditioning device or lock of the doors is transmitted from the application server 2 to the push server 3, and the push server 3 transmits the push data to the in-vehicle ECU 5 via the in-vehicle communication device 4. Then the push data is transmitted to the application 6 that performs the start of air conditioning device, the locking of doors, and the like.

FIG. 1 illustrates a configuration in which one push server 3 is provided for multiple application servers 2 on the cloud. Alternatively, multiple push servers 3 may be provided for multiple application servers 2. In one example, one in-vehicle communication device 4 is provided for multiple in-vehicle ECUs 5 in the vehicle. Alternatively, multiple in-vehicle communication devices 4 may be provided for multiple in-vehicle ECUs 5.

The push system 1 adopts an automotive wireless communication platform 7. The automotive wireless communication platform 7 includes an ACP cloud 8 provided on the cloud and an ACP engine 9 provided on the vehicle for function implementation purpose. The automotive wireless communication platform 7 enables a secure connection between the application server 2 and the application 6 for anytime and anywhere. For example, when the vehicle is parked, the power supply to the in-vehicle ECU 5 is turned off, and the power supply state is different from another in-vehicle ECU. The system configuration including the in-vehicle ECU 5 differs from vehicle to vehicle. The automotive wireless communication platform 7 conceals, from the application server 2, such difference in the power supply state of in-vehicle ECU 5 and the difference in the system configurations of the vehicles. As a result, it is possible to implement a pseudo constant connection in which all the in-vehicle ECUs 5 are constantly connected to an external network for each vehicle.

A cloud system and the in-vehicle system in which the automotive wireless communication platform 7 is installed will be described below.

### (1) Cloud system

First, the in-vehicle system installed to the vehicle will be described. The application server 2 is a server that functions as a transmission request source of the push data. The application server 2 manages at least one of an application ID or a token for identifying the application 6. When transmitting the transmission request of push data to the push server 3, the application server 2 provides the application ID or the token as request information together with a message body to be transmitted to the application 6. When the token is used as the request information, the application server 2 reads out the token associated with the transmission destination of push data. The token serves as key information for determining the destination of push data in the push server 3 and the in-vehicle system.

The push server 3, which corresponds to a transmission source of the push data, includes a configuration that functions as an ACP cloud 8. The ACP cloud 8 implements the cloud-related functions of the automotive wireless communication platform 7. The push server 3 mainly includes a microcontroller. The microcontroller includes a processor 10, a RAM 11, and a storage medium 12. The push server 3 executes, using the processor 10, a control program stored in the storage medium 12 to perform various operations, thereby implementing the cloud-related functions of the automotive wireless communication platform 7.

The push server 3 connects a communication line for wireless communication with the in-vehicle communication device 4 via a mobile communication network. The push server 3 is capable of transmitting push data to the in-vehicle communication device 4 in a connection state of the communication line. The mobile communication networks may be a mobile phone network, Wi-Fi (registered trademark), or V2X (Vehicle-to-Anything). When the push server 3 receives, from the application server 2, the transmission request of push data, the push server 3 selects the in-vehicle communication device 4, which is the transmission destination of push data, and transmits the push data to the in-vehicle communication device 4 selected as the destination.

The push server 3 provides, through TLS (Transport Layer Security) processing, functions such as authentication of communication partner, encryption of communication contents, and detection of tampering. The push server 3 provides functions of data communication using TCP/IP, UDP/IP and other protocols, thereby enabling secure data communication between the application server 2 and the in-vehicle communication device 4.

The push server 3 can retry transmission of push data within a predetermined time period. When transmitting the push data to the in-vehicle system, an immediate response is required from the in-vehicle system in some situations and it is sufficient that the push data reaches a notification destination in another situations. Thus, the retry period may set according to the required response. When the transmission of push data fails, the push server 3 retries transmission of the push data within a predetermined period before the elapse of retry period, based on the retry period set in accordance with the contents of push data. When the retry period has elapsed with the transmission of push data remaining failed, the push server 3 determines that the transmission of push data has failed, and ends the transmission of the push data.

### (2) In-vehicle system

The following will describe the in-vehicle system equipped to the vehicle. The in-vehicle communication device 4 is also referred to as a TCU (Telematics Control Unit) or a DCM (Data Communication Module), and corresponds to a destination of push data. The in-vehicle communication device 4 includes a configuration functioning as the ACP engine 9. The ACP engine 9 implements the vehicle-related functions of the automotive wireless communication platform 7. The in-vehicle communication device 4 mainly includes a microcontroller. The microcontroller includes a processor 13, a RAM 14, and a storage medium 15. The in-vehicle communication device 4 executes, using the processor 13, a control program stored in the storage medium 15 to perform various operations, thereby implementing the vehicle-related functions of the automotive wireless communication platform 7.

The in-vehicle communication device 4 is connected to multiple in-vehicle ECUs 5 via an in-vehicle network. Examples of in-vehicle network include Ethernet (registered trademark), CAN (Controller Area Network, registered trademark), FLEXRAY (registered trademark), CXPI (Clock Extension Peripheral Interface, registered trademark), and LIN (Local Interconnect Network). The in-vehicle network may be provided for each system, such as a powertrain system, a chassis system, a body system, a multimedia system, and a safety system.

The in-vehicle communication device 4 connects a communication line with the push server 3 for wireless communication purpose via a mobile communication network. The in-vehicle communication device 4 is capable of receiving push data from the push server 3 when the communication line is in connected state. When the in-vehicle communication device 4 receives the push data from the push server 3, the in-vehicle communication device 4 selects an in-vehicle ECU 5, which is the destination of push data, and transmits the push data to the in-vehicle ECU 5 selected as the destination.

The in-vehicle communication device 4 provides, using TLS processing, functions such as authentication of the communication partner, encryption of communication contents, and detection of tampering, as well as providing a data communication function using TCP/IP, UDP/IP, and other protocols. In some situations, secure data communication is enabled between the in-vehicle communication device 4 and the push server 3, and secure data communication is also enabled between the in-vehicle communication device 4 and the in-vehicle ECU 5.

The in-vehicle communication device 4 can maintain an online state, which is a state connected to the communication network, even when the vehicle's main power supply is in off state, for example, in a case where the vehicle is in parked state, specifically, in a case where the ignition switch of vehicle is in off state. The in-vehicle communication device 4 monitors the connection state between the in-vehicle communication device 4 and the push server 3 via wireless communication, and monitors a transmission state of push data in the in-vehicle network. The in-vehicle communication device 4 cooperates with the push server 3 to enable confirmation of interconnection between the in-vehicle communication device 4 and the push server 3. The confirmation of interconnection between the in-vehicle communication device 4 and the push server 3 is also referred to as alive monitoring.

When the push data fails to reach the destination, the in-vehicle communication device 4 notifies the transmission source the transmission failure of push data together with information about the reason associated with the transmission failure. As an example, when the application 6 or the in-vehicle ECU 5 to which the push data is to be transmitted does not exist on the in-vehicle network, the in-vehicle communication device 4 notifies the push server 3, which is the transmission source of push data, of the transmission failure of push data together with the associated reason information indicating the reason of transmission failure. When the transmission of push data to the application 6 fails, the in-vehicle communication device 4 notifies the push server 3, which is the transmission source of the push data, of the failure in transmission of the push data in association with the failure reason information.

The in-vehicle communication device 4 specifies transmission destination information and status information as ECU information related to the in-vehicle ECU 5, which corresponds to the transmission destination of push data. The transmission destination information may also be referred to as destination information. The destination information indicates the in-vehicle ECU 5 to which the push data is to be transmitted among multiple in-vehicle ECUs 5. The in-vehicle communication device 4 acquires the destination information by referring to the application ID or the token. The status information is information capable of specifying the power supply state (on state or off state) of the in-vehicle ECU 5, which corresponds to the transmission destination. A power-off state refers to a state in which the in-vehicle ECU 5 is switched from an active state to a sleep state or the like in response to the ignition switch being turned off. In the sleep state of the in-vehicle ECU 5, the in-vehicle ECU 5 is able to receive a startup request in a power saving state, but is unable to perform data communication. When the power supply to the in-vehicle ECU 5, which corresponds to the transmission destination, is specified as off state based on the status information, the in-vehicle communication device 4 performs a startup process to start the in-vehicle ECU 5 and turn on the power supply (startup state).

The in-vehicle ECU 5 is equipped with one or more applications 6 and is capable of executing the applications. The in-vehicle ECU 5 mainly includes a microcontroller, and the microcontroller includes a processor (not shown), a RAM (not shown), and a storage medium (not shown). The in-vehicle ECU 5 executes, using the processor, various operations by executing control program stored in a storage medium, and operates as an end ECU that is the final destination of push data transmitted from the push server 3. When the in-vehicle ECU 5 receives the push data transmitted from the in-vehicle communication device 4, the in-vehicle ECU 5 identifies registration information that matches the application ID or token associated with the push data, identifies a destination application 6 from multiple applications 6 to which the push data is to be transmitted, and transmits the push data to the application 6 identified as the destination.

The in-vehicle ECU 5 provides a cryptographic processing function, thereby enabling secure data communication between the in-vehicle communication device 4 and the application 6. Unlike the in-vehicle communication device 4, the in-vehicle ECU 5 is basically turned off when the vehicle power supply is turned off in order to reduce power consumption. In the turn-off state, the in-vehicle ECU 5 is also disconnected from the communication network. Some in-vehicle ECU 5 may not be equipped with the application 6. The in-vehicle communication device 4 may also have the functions of the in-vehicle ECU 5 within the in-vehicle system, and the application 6 may be installed to the in-vehicle communication device 4.

In the above-described configuration, it is desirable to reduce a standby power consumption, which is a power consumption of the in-vehicle communication device, during a monitoring state of notification, which notifies push data transmitted from the push server 3. When the vehicle is parked for a long period of time and thus a remaining capacity of vehicle battery needs to be ensured, it is desirable to reduce the power consumption of battery in the standby state as much as possible. However, in a known method for reducing the consumption power of standby state, a data length of push data received from the push server 3 is short or a strict security restriction is required. With consideration of this point, in the present embodiment, the in-vehicle communication device 4 and the push server 3 each has the following functions.

In the present embodiment, the first communication method is a short message service (hereinafter, referred to as an SMS method), and the second communication method is an MQTT (Message Queuing Telemetry Transport) method. The SMS method has a lower standby power consumption than that of the MQTT method, but the data length of push data, which can be communicated by the SMS method, is shorter than that of the MQTT method and the restriction on security requirement is stricter than that of the MQTT method. The MQTT method has a longer data length, which is used in communication of push data, than that of the SMS method and has less strict security restriction than that of the SMS method. However, the MQTT method consumes more power in standby state than that of the SMS method. Comparing the SMS method and the MQTT method, the SMS method is superior in terms of standby power consumption, while the MQTT method is superior in terms of the data length for communicating the push data and restriction on security requirement.

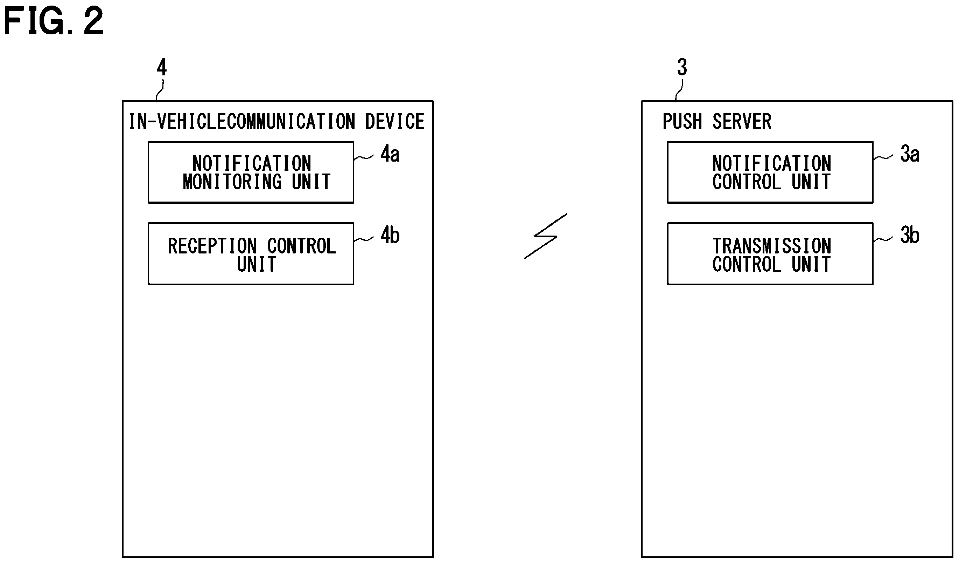

As shown in FIG. 2, the in-vehicle communication device 4 includes a notification monitoring unit 4a and a reception control unit 4b. The notification monitoring unit 4a monitors notification of startup request from the push server 3 using either the SMS method or the MQTT method. The notification monitoring unit 4a notifies the push server 3 of notification monitoring information indicating the method by which the notification monitoring of the startup request from the push server 3 is performed between the SMS method or the MQTT method. The notification monitoring unit 4a notifies the push server 3 of the notification monitoring information in association with a device ID, which enables identifying of the in-vehicle communication device 4. The device ID corresponds to device identification information.

When the notification monitoring unit 4a monitors the notification of startup requests from the push server 3 using the MQTT method, the notification monitoring unit 4a further monitors whether a condition for suppressing the standby power consumption is satisfied. For example, the condition for suppressing the standby power consumption, which is also referred to suppression condition of standby power consumption may be satisfied when a predetermined period of time has passed since the vehicle is parked or an amount of power consumption since the vehicle is parked has reached a threshold. When the notification monitoring unit 4a determines that the suppression condition of standby power suppression is satisfied, the in-vehicle communication device establishes a connection with the push server 3 using the SMS method, and disconnects the connection based on MQTT method from the push server 3. Then, the notification monitoring unit 4a monitors the notification of startup requests from the push server 3 using the SMS method. When the notification monitoring unit 4a determines that the suppression condition of standby power consumption is satisfied, the notification monitoring unit switches the communication method for monitoring the notification of startup request from the push server 3 from the MQTT method to the SMS method.

The reception control unit 4b receives the push data transmitted from the push server 3 using the MQTT method. By receiving the push data from the push server 3 using the MQTT method, the reception control unit 4b ensures that the data length of push data that can be received from the push server 3 is longer compared with a case where the SMS method is used, and can decrease the level of restriction on the security requirement compared with a case where the SMS method is used.

The push server 3 includes a notification control unit 3a and a transmission control unit 3b. The notification control unit 3a notifies the in-vehicle communication device 4 of the startup request using the SMS method or the MQTT method. The notification control unit 3a determines, based on the notification monitoring information transmitted from the in-vehicle communication device 4, whether the monitoring on notification of startup request in the in-vehicle communication device 4 is performed using the SMS method or the MQTT method. When the notification control unit 3a determines that the method used for monitoring on notification of startup request in the in-vehicle communication device 4 is performed using the SMS method, the notification control unit 3a transmits, to the in-vehicle communication device 4, the startup request using the SMS method. When the notification control unit 3a determines that the method used for monitoring on notification of startup request in the in-vehicle communication device 4 is performed using the MQTT method, the notification control unit 3a transmits, to the in-vehicle communication device 4, the startup request using the MQTT method.

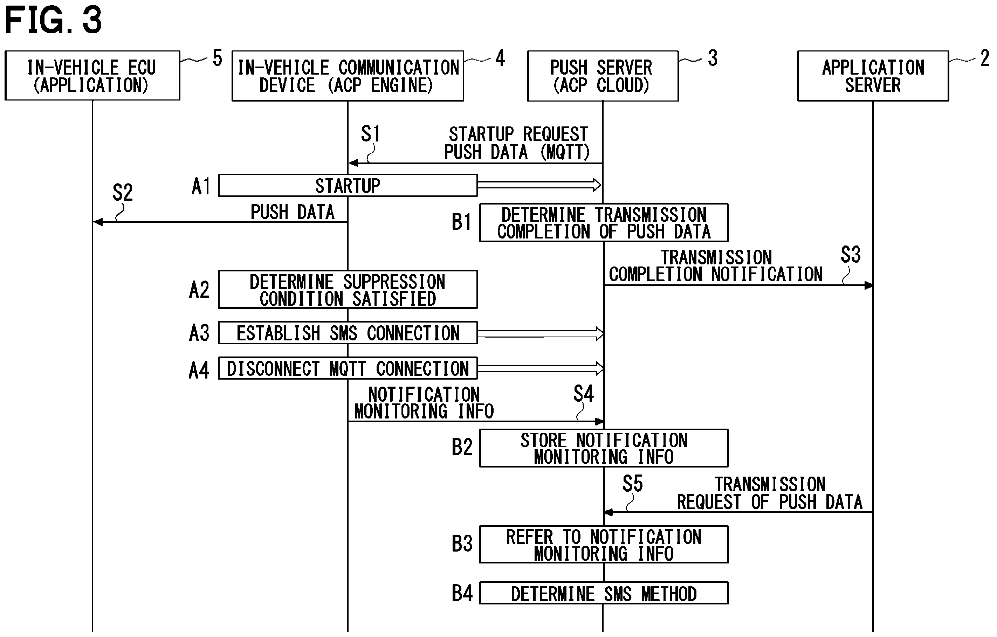

The operation of the above-described configuration will be described with reference to FIG. 3 to FIG. 6.

The push server 3 notifies the in-vehicle communication device 4, which is the destination of push data, of the startup request, and transmits the push data to the in-vehicle communication device 4 by the MQTT method (S1). When the in-vehicle communication device 4 monitors notification of startup request from the push server 3 using the MQTT method, the in-vehicle communication device 4 starts up in response to reception of the startup request from the push server 3 (A1). When the in-vehicle communication device 4 receives the push data transmitted from the push server 3, the in-vehicle communication device 4 transmits the received push data to the in-vehicle ECU 5 (S2). When the push server 3 determines that transmission of push data to the in-vehicle communication device 4 is completed (B1), the push server 3 transmits, to the application server 2, a transmission completion notification (S3).

The in-vehicle communication device 4 monitors whether the suppression condition of standby power consumption is satisfied. A connection between the in-vehicle communication device and the push server using the SMS method is also referred to as a SMS connection, and a connection between the in-vehicle communication device and the push server using the MQTT method is also referred to as a MQTT connection. In response to determining that the suppression condition of standby power consumption is satisfied (A2), the in-vehicle communication device establishes the SMS connection with the push server 3 (A3), disconnects the MQTT connection has been established with the push server 3 (A4), and notifies the push server 3 of the notification monitoring information (S4). Then, the in-vehicle communication device 4 monitors notification of startup request from the push server 3 using the SMS method.

When the push server 3 receives notification monitoring information from the in-vehicle communication device 4, the push server 3 stores the notification monitoring information in association with the in-vehicle communication device 4 that is the transmission source of the notification monitoring information (B2), and stores information indicating that the in-vehicle communication device 4 is performing the notification monitoring of startup request from the push server 3 using the SMS method.

When the push server 3 receives the transmission request of push data from the application server 2 (S5), the push server 3 refers to the notification monitoring information stored in association with the in-vehicle communication device 4 to which the push data is to be transmitted (B3). When the push server 3 determines that the in-vehicle communication device 4, which is the destination of push data, is monitoring the notification of startup request from the push server 3 using the SMS method (B4), the push server 3 notifies the startup request to the in-vehicle communication device using the SMS method (S6).

When the in-vehicle communication device 4 receives the startup request from the push server 3 using the SMS method, the in-vehicle communication device 4 starts up (A5) and establishes the MQTT connection with the push server 3 (A6). When the push server 3 determines that the MQTT connection with the in-vehicle communication device 4 is established, the push server 3 recognizes the MQTT connection (B5) and transmits the push data to the in-vehicle communication device 4, which is the destination of push data, using the MQTT method (S7). When the in-vehicle communication device 4 receives the push data transmitted from the push server 3, the in-vehicle communication device 4 transmits the received push data to the in-vehicle ECU 5 (S8).

When the in-vehicle ECU 5 receives the push data transmitted from the in-vehicle communication device 4, the in-vehicle ECU 5 transmits the push data to the destination application 6, starts the destination application 6, and controls the remote request service corresponding to the push data. When the in-vehicle ECU 5 receives the push data transmitted from the in-vehicle communication device 4, the in-vehicle ECU 5 notifies the in-vehicle communication device 4 of a push data reception response (S9). When the in-vehicle communication device 4 receives the push data reception response from the in-vehicle ECU 5, the in-vehicle communication device 4 confirms reception of the push data by the in-vehicle ECU (A7), and notifies the push server 3 of the push data reception response (S10).

When the push server 3 receives the push data reception response from the in-vehicle communication device 4, the push server 3 determines that transmission of push data to the in-vehicle communication device 4 is completed (B6), and notifies the application server 2 of a transmission completion notification (S11).

The in-vehicle communication device 4 establishes the SMS connection with the push server 3 (A8), disconnects the MQTT connection with the push server 3 (A9), and notifies the push server 3 of the notification monitoring information (S12). Then, the in-vehicle communication device 4 monitors notification of startup request from the push server 3 using the SMS method.

When the push server 3 receives notification monitoring information from the in-vehicle communication device 4, the push server 3 stores the notification monitoring information in association with the in-vehicle communication device 4 that is the transmission source of the notification monitoring information (B7), and stores information indicating that the in-vehicle communication device 4 is performing the notification monitoring of startup request from the push server 3 using the SMS method. Then, the push server 3 waits for a notification of transmission request of push data from the application server 2, and repeats the above-described process.

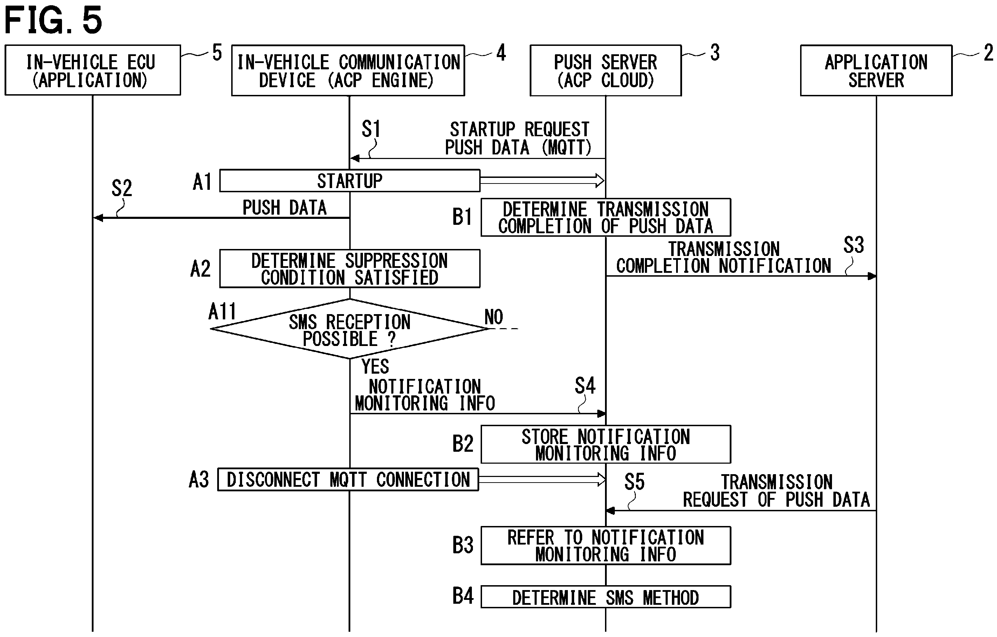

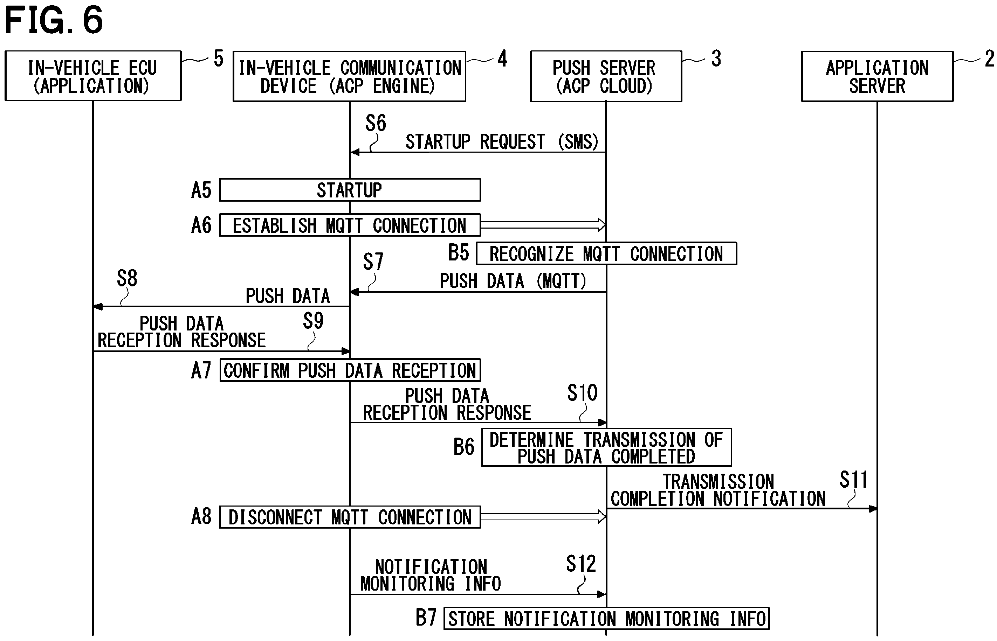

As shown in FIG. 5 and FIG. 6, when the in-vehicle communication device 4 determines that the suppression condition of standby power consumption is satisfied (A2), the in-vehicle communication device determines whether reception using SMS connection is possible (A11). In response to determining that reception using SMS connection is possible (A11: YES), the in-vehicle communication device may notify the push server 3 of notification monitoring information (S4). When the in-vehicle communication device 4 determines that the reception using SMS connection is not possible (A11: NO), the in-vehicle communication device 4 notifies the push server 3 that push reception is ended.

The above-described first embodiment provides following technical effects. The in-vehicle communication device 4 monitors the notification of startup request from the push server 3 using the SMS method, and receives the push data from the push server 3 using the MQTT method. By monitoring notification of startup request using the SMS method, which consumes lower standby power than that of the MQTT method, standby power consumption can be appropriately reduced. By receiving push data from the push server 3 using the MQTT method, which allows longer length of push data than SMS method, the length of push data received from the push server 3 is longer than that of the SMS method. Thus, the push data transmitted from the push server 3 can be properly received. With this configuration, the standby power consumption can be properly reduced and the push data transmitted from the push server 3 can be properly received by the in-vehicle communication device. Further, this configuration can loosen restriction on security requirement when receiving the push data transmitted from the push server 3.

In the present embodiment, in response to determining that the suppression condition of standby power consumption is satisfied, the MQTT connection between the in-vehicle communication device and the push server 3 is disconnected, and the SMS connection is established between the in-vehicle communication device and the push server 3. By registering suppression condition of standby power consumption in advance, it is possible to appropriately suppress standby power consumption according to a planned use of the vehicle. By appropriately suppressing the standby power consumption, it is possible to properly monitor the vehicle for theft in a parked state. By appropriately suppressing the standby power consumption, for an electric vehicle, it is possible to ensure a longer driving distance with the remaining battery capacity.

The push server 3 transmits the startup request to the in-vehicle communication device 4 using the SMS method, and transmits the push data to the in-vehicle communication device 4 using the MQTT method. By transmitting the push data to the in-vehicle communication device 4 using the MQTT method, the data length of push data transmitted to the in-vehicle communication device 4 is longer compared with a case where the SMS method is used. Thus, the push data can be properly transmitted to the in-vehicle communication device 4.

### (Second Embodiment)

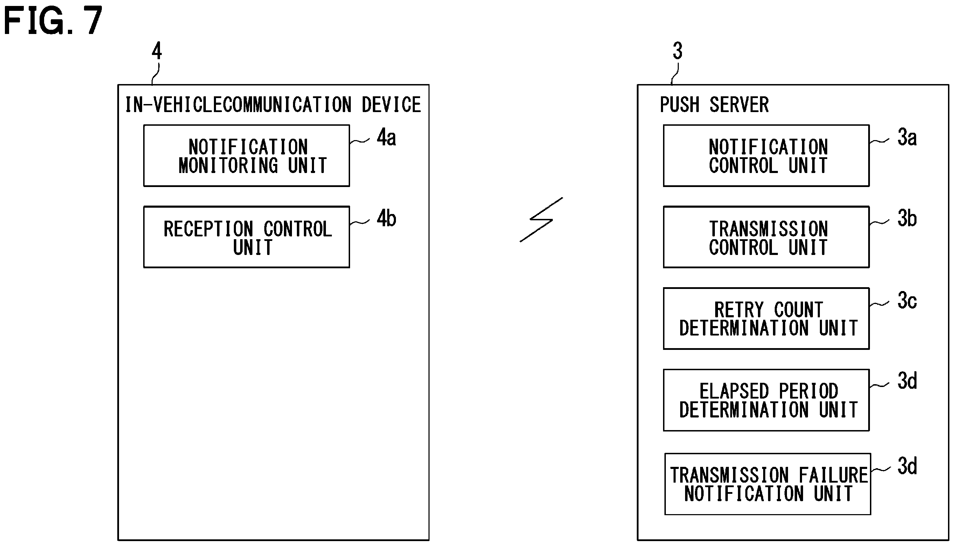

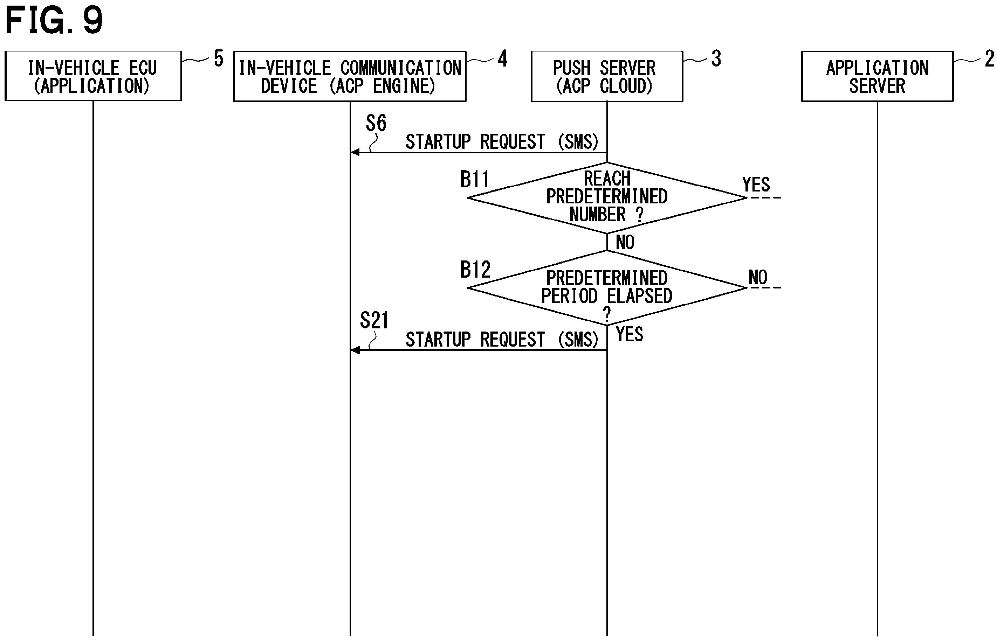

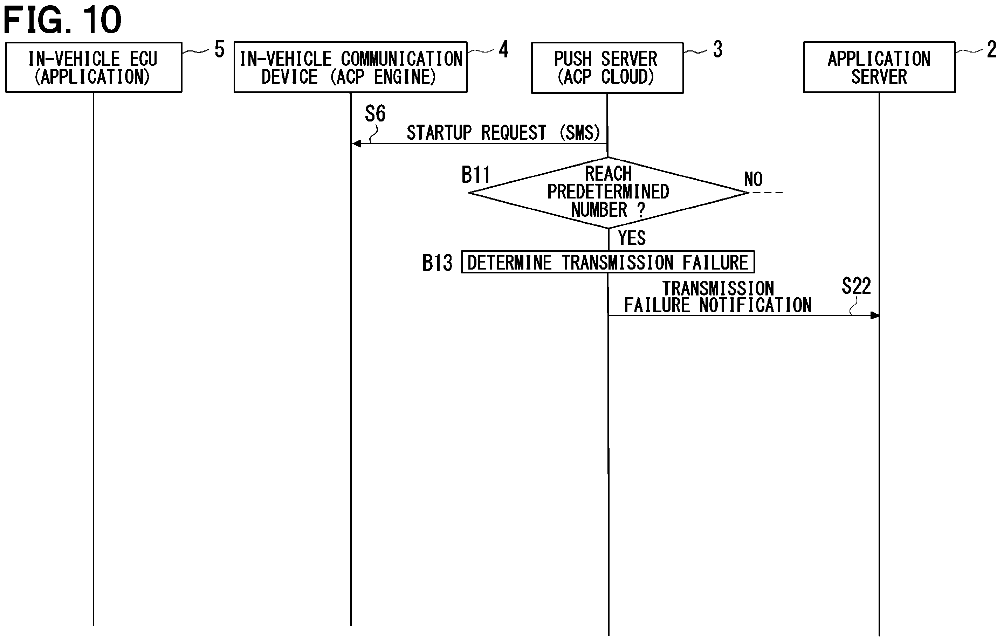

The following will describe a second embodiment with reference to FIG. 7 to FIG. 10. In the second embodiment, the push server 3 is configured to retry notification of startup request, taking into consideration that the communication assurance of SMS method is not sufficiently high.

The push server 3 includes a notification control unit 3a, a transmission control unit 3b, a retry count determination unit 3c, an elapsed period determination unit 3d, and a transmission failure notification unit 3e. The retry count determination unit 3c determines the number of retries by which the push server notifies the in-vehicle communication device 4 of the startup request. The elapsed period determination unit 3d determines an elapsed period from when the startup request is notified to the in-vehicle communication device 4. When the retry count determination unit 3c determines that the number of retries by which the push server notifies the in-vehicle communication device 4 of the startup request has not reached a predetermined number and the elapsed period determination unit 3d determines that the elapsed period since the latest startup request was notified to the in-vehicle communication device 4 has reached a predetermined period, the notification control unit 3a retries notifying the in-vehicle communication device 4 of the startup request using the SMS method. When the retry count determination unit 3c determines that the number of retries by which the push server notifies the in-vehicle communication device 4 of the startup request has reached the predetermined number, the notification control unit 3a stops retrying the notification of startup request to the in-vehicle communication device 4. When the retry count determination unit 3c determines that the number of retries by which the push server notifies the in-vehicle communication device 4 of the startup request has reached the predetermined number, the transmission failure notification unit 3e transmits, to the application server 2, a transmission failure notification indicating that transmission of push data is failed.

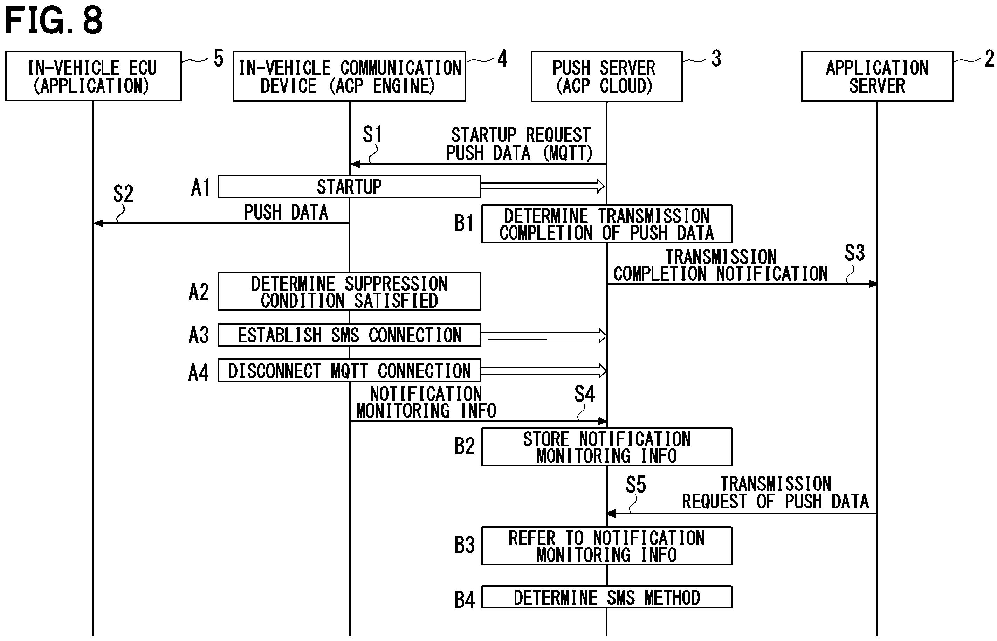

The operation of the above-described configuration will be described with reference to FIG. 8 to FIG. 10.

When the push server 3 notifies the startup request using the SMS method (S6), the push server 3 determines the number of retries by which the push server transmits the startup request to the in-vehicle communication device 4 (B11). When the push server 3 determines that the number of retries has not reached the predetermined number (B11: NO), the push server 3 determines the elapsed period since the latest startup request was notified to the in-vehicle communication device 4 (B12). When the push server 3 determines that the elapsed period has reached the predetermined period (B12: YES), the push server retries notifying the in-vehicle communication device 4 of the startup request by the SMS method (S21), and counts the number of retries. The in-vehicle communication device 4 is activated in response to reception of the startup request from the push server 3 using the SMS method, and thereafter executes the same process as in the first embodiment.

When the push server 3 determines that the number of retries has reached the predetermined number (B11: YES), the push server stops retrying to notify the vehicle communication device 4 of the startup request, and determines that the transmission of push data has failed (B13). Then, the push server 3 transmits, to the application server 2, a transmission failure notification indicating that transmission of push data to the in-vehicle communication device is failed (S22).

As described above, according to the second embodiment, when the push server 3 determines that the number of retries has not reached the predetermined number and determines that the predetermined period has elapsed from last time transmission of startup request, the push server retries transmission of startup request to the in-vehicle communication device 4 using the SMS method. Although the communication assurance of SMS method is not sufficiently high, with this configuration, it is possible to properly increase the communication assurance by retrying the notification of startup request to the in-vehicle communication device 4. Furthermore, in response to determining that the number of retries has reached the predetermined number, the push server stops retry of notifying the in-vehicle communication device 4 of the startup request, and transmits, to the application server 2, the transmission failure notification indicating that transmission of push data is failed. Thus, it is possible to impose a limit on the number of retries, thereby avoiding use of unnecessary power consumption.

### (Third Embodiment)

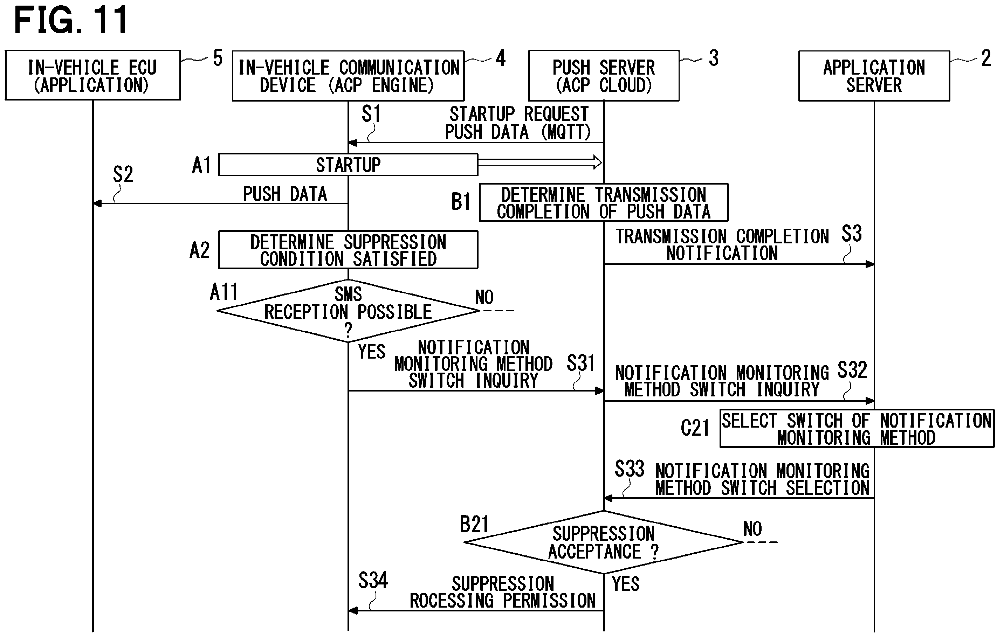

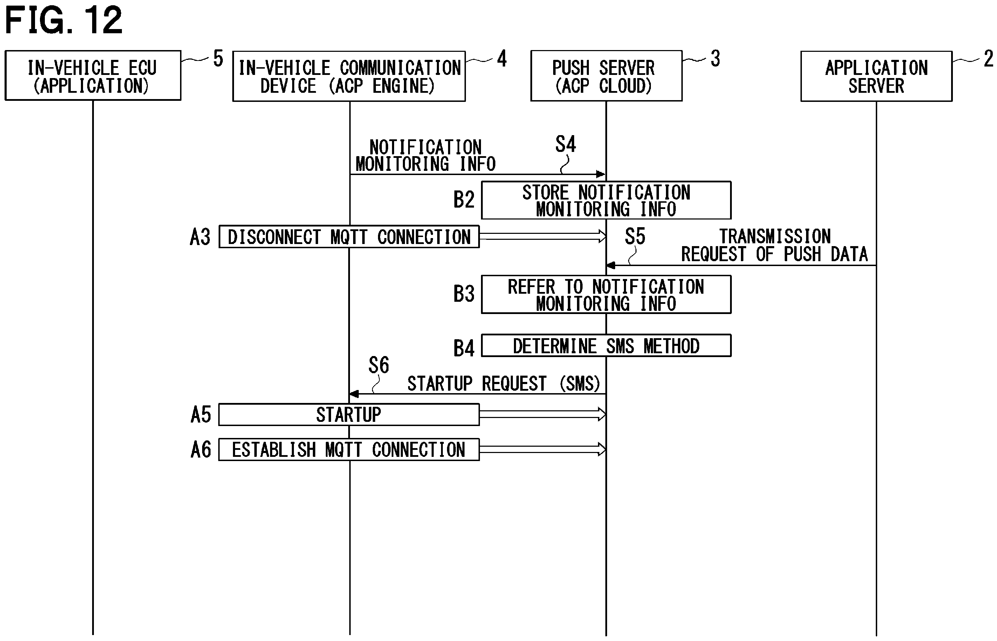

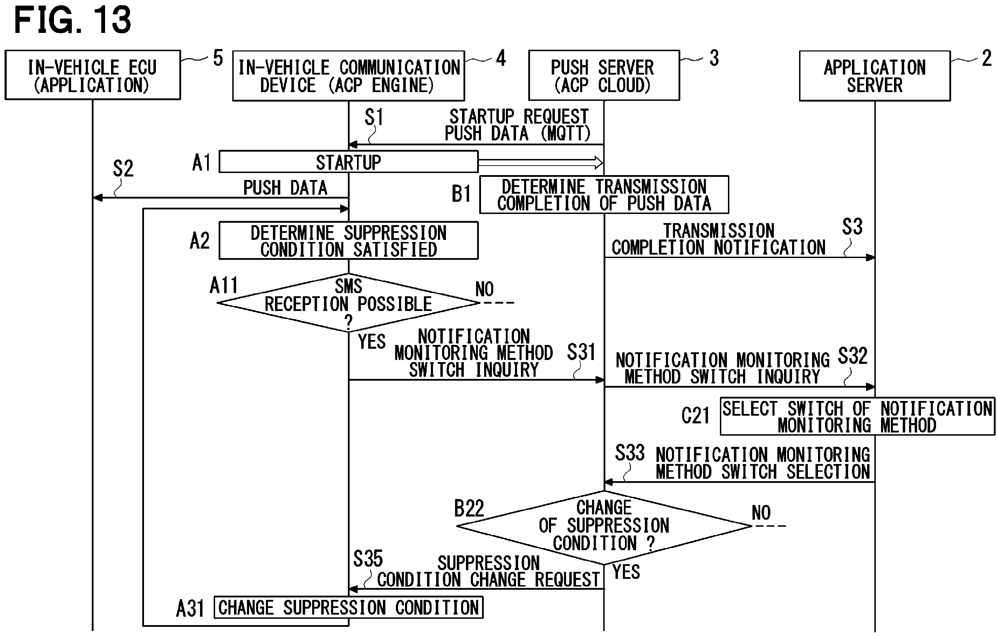

The following will describe a third embodiment with reference to FIG. 11 to FIG. 13. In the third embodiment, when the in-vehicle communication device 4 determines that the suppression condition of standby power consumption is satisfied thereby determining that reception using SMS connection is possible, the in-vehicle communication device 4 inquires the push server 3 about switch of notification monitoring method.

When the in-vehicle communication device 4 determines that the suppression condition of standby power is satisfied (A2), the in-vehicle communication device 4 determines whether an SMS reception, that is, reception using SMS method is possible (A11). In response to determining that the SMS reception is possible (A11: YES), the in-vehicle communication device 4 inquires the push server 3 about switch of the notification monitoring method, which is referred to as a notification monitoring method switch inquiry (S31). When the push server 3 receives the notification monitoring method switch inquiry from the in-vehicle communication device 4, the push server 3 notifies the application server 2 of the notification monitoring method switch inquiry (S32).

When the application server 2 receives the notification monitoring method switch inquiry from the push server 3, the application server 2 selects switch of the notification monitoring method (C21). The application server 2 selects either the suppression acceptance or change of suppression condition, and notifies the push server 3 of a notification monitoring method switch selection (S33). When the push server 3 receives the notification monitoring method switch selection from the application server 2, the push server 3 determines whether the switched selection is the suppression acceptance or change of suppression condition (B21, B22). When the push server 3 determines that the switched selection is suppression acceptance (B21: YES), the push server 3 notifies the in-vehicle communication device 4 of a suppression processing permission (S34). When the in-vehicle communication device 4 receives the suppression processing permission from the push server 3, the in-vehicle communication device 4 notifies the push server 3 of the notification monitoring information (S4). When the push server 3 receives the notification monitoring information from the in-vehicle communication device 4, the push server 3 performs the same process as in the first embodiment.

When the push server 3 determines that the switched selection is change of suppression condition (B22: YES), the push server 3 notifies the vehicle communication device 4 of a request to change the suppression condition, which is referred to as a suppression condition change request (S35). When the in-vehicle communication device 4 receives the suppression condition change request from the push server 3, the in-vehicle communication device 4 changes the suppression condition (A31) and returns to step A2.

As described above, according to the third embodiment, the push server 3 transmits, to the application server 2, the notification monitoring method switch inquiry. Thus, the user or the system can select whether to accept the suppression or change the suppression condition.

### (Fourth Embodiment)

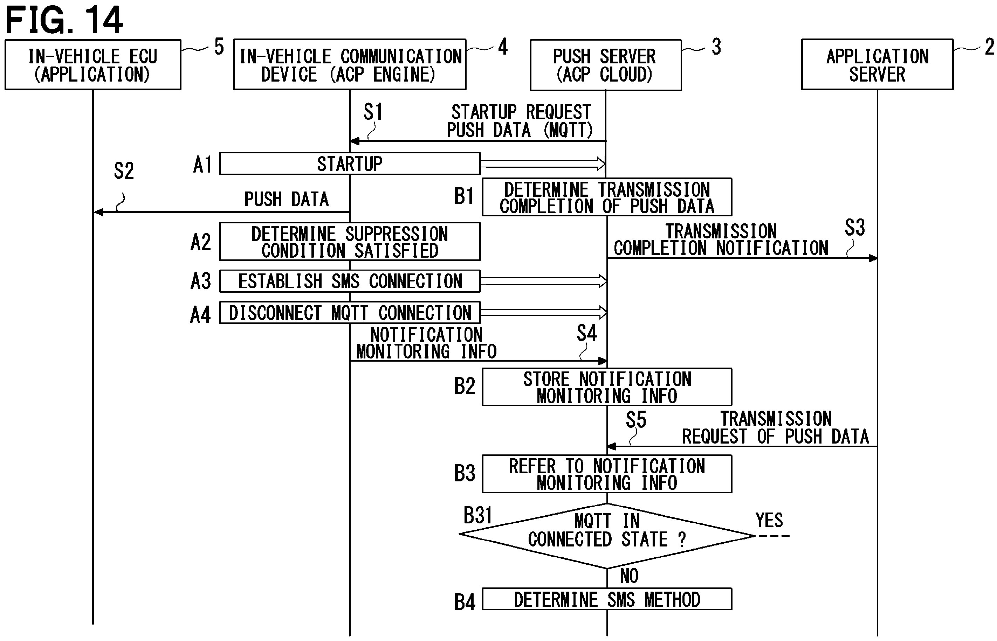

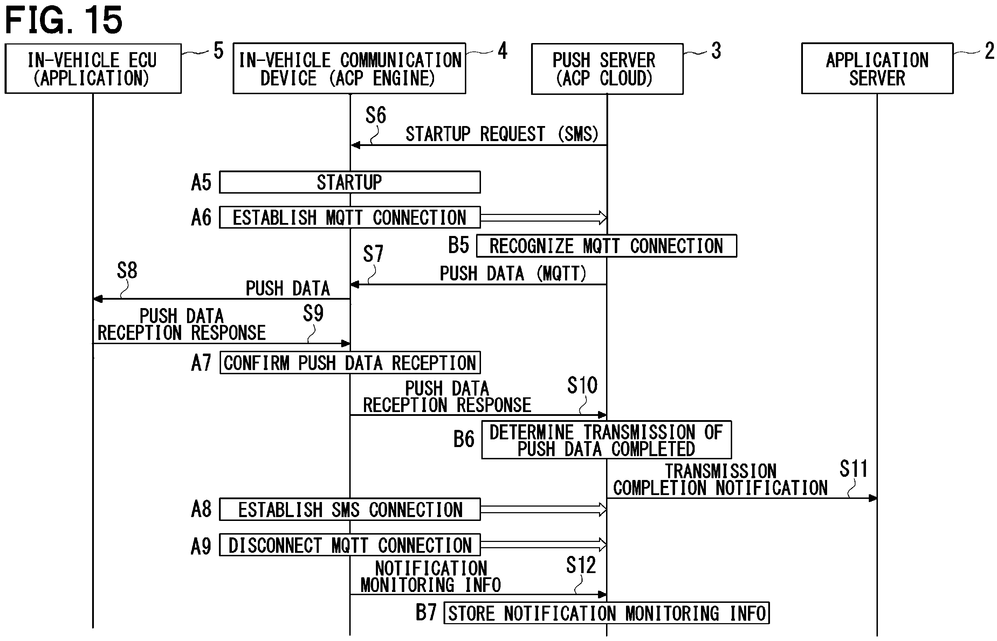

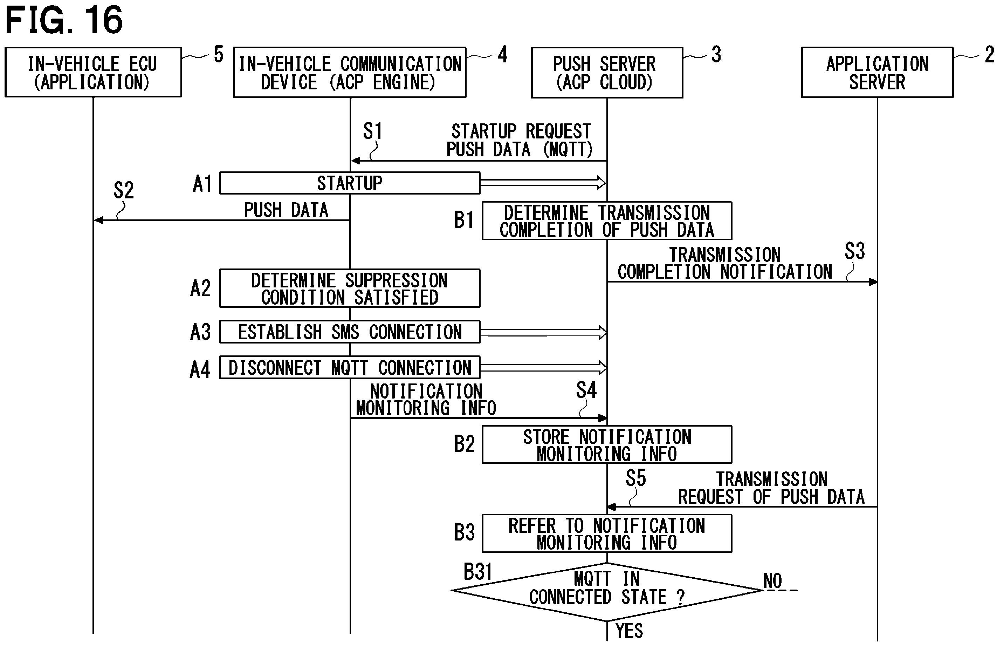

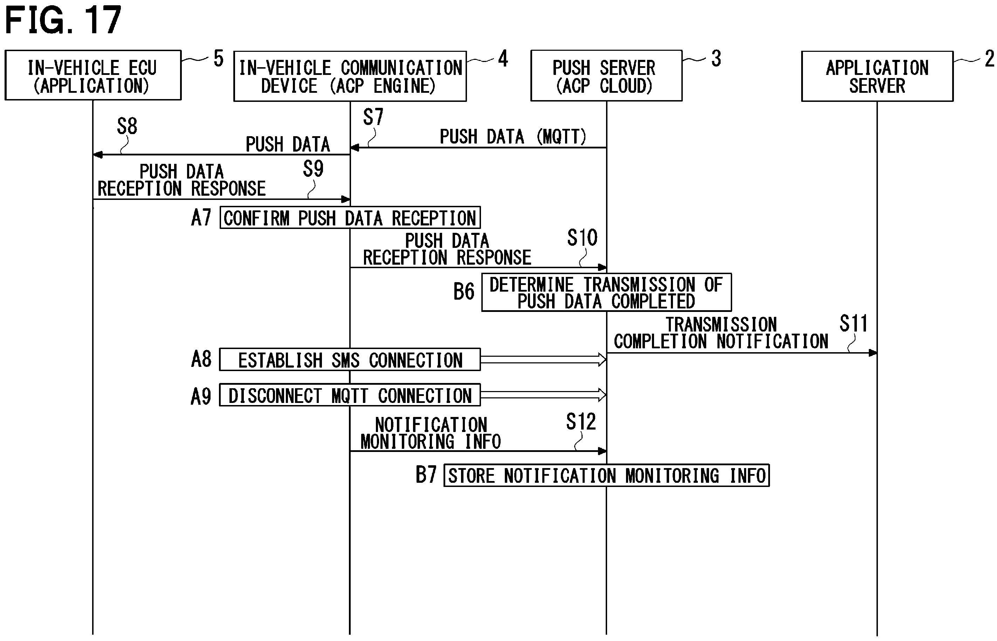

The following will describe a fourth embodiment with reference to FIG. 14 to FIG. 17. In the fourth embodiment, the push server 3 determines whether the MQTT connection is in connected state.

When the push server 3 receives the transmission request of push data from the application server 2 (S5), the push server 3 refers to the notification monitoring information stored in association with the in-vehicle communication device 4 to which the push data is to be transmitted (B3) and determines whether the MQTT connection is in a connected state (B31). When the push server 3 determines that the MQTT is not in connected state (B31: NO), the push server determines that the in-vehicle communication device 4, which is the destination of push data, is monitoring notification of startup request from the push server 3 using the SMS method (B4). Then, the push server notifies the startup request using the SMS method (S6), and performs the same process as in the first embodiment thereafter.

When the push server 3 determines that the MQTT connection is in connected state (B31: YES), the push server 3 transmits the push data to the in-vehicle communication device 4, which is the destination of push data, using the MQTT method (S7), and performs the same process as in the first embodiment thereafter.

As described above, according to the fourth embodiment, when the push server 3 receives the transmission request of push data from the application server 2, the push server 3 determines whether the MQTT connection is in connected state. In response to determining that the MQTT connection is in connected state, the push server transmits the push data to the in-vehicle communication device 4, which is the destination of the push data, using the MQTT method. With this configuration, when the MQTT connection is in connected state, the push data can be immediately transmitted to the in-vehicle communication device 4.

### (Other embodiments)

While the present disclosure has been described based on the above embodiments, the present disclosure is not limited to the embodiments or structures described herein. The present disclosure includes various modification examples and equivalents thereof. Various combinations and configurations, as well as other combinations and configurations including more, less, or only a single element, are within the scope and spirit of the present disclosure.

In the foregoing embodiments, each function provided by the push server 3 or the in-vehicle communication device 4 may be implemented in software manner or hardware manner. For example, the functions of push server 3 and the in-vehicle communication device 4 may be implemented only in software manner, only in hardware manner, or a combination of software manner and hardware manner. When such functions are provided by electronic circuits as hardware implementation, each function may be provided by a digital circuit including a large number of logic circuits, or an analog circuit.

The processor 10 of the push server 3 and the processor 13 of the in-vehicle communication device 4 each includes at least one arithmetic core such as a CPU (Central Processing Unit). A processing circuit including the processor 10 or the processor 13 may be configured mainly using an FPGA (Field-Programmable Gate Array) and an ASIC (Application-Specific Integrated Circuit).

The storage medium 12 of the push server 3 and the storage medium 15 of the in-vehicle communication device 4 each may include a non-volatile storage medium. The implementation of each storage medium 12, 15 may be changed as appropriate. For example, each storage medium 12, 15 is not limited to being provided on a circuit board, but may be provided in the form of a memory card or the like and may be configured to be electrically connected to the processing circuits of the push server 3 and the in-vehicle communication device 4 by being inserted into a slot portion. Furthermore, each storage medium 12, 15 may be provided by an optical disk or a hard disk drive, etc., from which the program can be read out.

The controller and the method thereof described in the present disclosure may be implemented by a dedicated computer provided by configuring a processor and a memory programmed to execute one or more functions embodied by a computer program. Alternatively, the controller and the method thereof described in the present disclosure may be implemented by a dedicated computer provided by configuring a processor with one or more dedicated hardware logic circuits. Alternatively, the controller and the method thereof described in the present disclosure may be implemented by one or more dedicated computers configured by a combination of (i) a processor and a memory programmed to execute one or more functions and (ii) a processor including one or more hardware logic circuits. The computer program may be stored in a computer-readable non-transitory tangible storage medium as instructions to be executed by a computer.

## Claims

1. An in-vehicle communication device (4) transmitting, to an in-vehicle electronic control unit, push data in response to receiving the push data from a push server, the push server transmitting, to the in-vehicle communication device, the push data in response to reception of a transmission request of the push data from an application server, the in-vehicle communication device comprising:
a notification monitoring unit (4a) monitoring notification of startup request transmitted from the push server using a first communication method, wherein the first communication method requires a lower standby power consumption than a second communication method; and
a reception control unit (4b) receiving the push data transmitted from the push server using the second communication method, wherein the second communication method allows a longer data length of push data than the first communication method.

2. The in-vehicle communication device according to claim 1, wherein
the notification monitoring unit transmits, to the push server, notification monitoring information in association with device identification information,
the notification monitoring information indicates whether monitoring of the startup request transmitted from the push server is performed using the first communication method or the second communication method, and
the device identification information enables identifying of the in-vehicle communication device.

3. The in-vehicle communication device according to claim 1 or 2, wherein
the notification monitoring unit establishes a connection with the push server using the first communication method and disconnects a connection that has been established with the push server using the second communication method, thereby monitoring the notification of startup request transmitted from the push server using the first communication method.

4. The in-vehicle communication device according to claim 3, wherein
the notification monitoring unit establishes the connection with the push server using the first communication method and disconnects the connection that has been established with the push server using the second communication method when a suppression condition of standby power consumption is satisfied.

5. A push server (3) transmitting push data to an in-vehicle communication device upon receiving a transmission request of the push data from an application server, the push server comprising:
a notification control unit (3a) notifying the in-vehicle communication device of a startup request using a first communication method, wherein the first communication method requires a lower standby power consumption of the in-vehicle communication device than a second communication method; and
a transmission control unit (3b) transmitting the push data to the in-vehicle communication device using the second communication method, wherein the second communication method allows a longer data length of push data to be transmitted to the in-vehicle communication device than the first communication method.

6. The push server according to claim 5, further comprising:
a retry count determination unit (3c) determining the number of retries by which the push server has notified the in-vehicle communication device of the startup request; and
an elapsed period determination unit (3d) determining an elapsed period since the startup request is notified to the in-vehicle communication device,
wherein,
when the notification control unit determines that the number of retries, by which the push server notified the in-vehicle communication device of the startup request, does not reach a predetermined number and determines that the elapsed period since the startup request is notified to the in-vehicle communication device reaches a predetermined period, the notification control unit retries notifying the in-vehicle communication device of the startup request using the first communication method.

7. The push server according to claim 6, further comprising
a transmission failure notification unit (3e) notifying the application server of a transmission failure notification, which indicates a failure in transmission of the push data, in response to determining that the number of retries, by which the push server notified the in-vehicle communication device of the startup request, reaches the predetermined number.
